# EUROPEAN PATENT APPLICATION

(11) **EP 4 845 294 A1**
(43) Date of publication of application: **25.11.2026**
(21) Application number: 24918148.8
(22) Date of filing: 22.10.2024
(51) Int. Cl.: H04W 76/10

(54) **COMMUNICATION CONNECTION ESTABLISHMENT METHOD, ELECTRONIC DEVICE, AND STORAGE MEDIUM**

(30) Priority: 19.01.2024 CN 202410080997
(71) Applicant: Shenzhen Falcon Network Media Co., Ltd., Shenzhen, Guangdong 518000 (CN)
(72) Inventor: LIU, Jianshuang, Hong Kong Cooperation Zone Shenzhen, Guangdong 518000 (CN)
(74) Representative: Petraz, Gilberto Luigi
(86) International application number: PCT/CN2024/126440
(87) International publication number: WO 2025/152539

(57) **Abstract**

The present application discloses a communication connection establishment method, an electronic device, and a storage medium. The method comprises: in response to a networking request sent by a sending end to a receiving end, acquiring an interface address of the sending end and an address protocol parsing table of the receiving end; on the basis of the interface address and the address protocol parsing table, acquiring an Internet protocol address of the sending end; and on the basis of the Internet protocol address, initiating a connection request to the sending end, so that the sending end establishes a communication connection with the receiving end on the basis of the connection request.

## Description

This application claims priority to Chinese Patent Application No. 202410080997.X, filed on January 19, 2024, and titled "COMMUNICATION CONNECTION ESTABLISHMENT METHOD, APPARATUS, ELECTRONIC DEVICE, AND STORAGE MEDIUM", the entire content of which is incorporated herein by reference.

### TECHNICAL FIELD

This application relates to the field of communication technologies, and specifically, to a communication connection establishment method and apparatus, an electronic device, and a storage medium.

### BACKGROUND

On platforms such as Android, the typical implementation of communication between Wi-Fi Direct devices and of the Miracast protocol involves obtaining the Peer-to-Peer (P2P) Device Address of a peer P2P device, performing a Reverse Address Resolution Protocol (RARP) query to obtain the IP address of the peer P2P device, and finally establishing Socket connection communication between P2P devices within a P2P Group. However, from the principles of Wi-Fi Direct ad-hoc networking, it is understood that communication between devices in a P2P Group should use the P2P Interface Address for better reliability. The P2P Interface Address is not necessarily consistent with the P2P Device Address, especially when a P2P device has the random MAC address feature enabled.

### TECHNICAL PROBLEM

A major defect of the typical implementation, which uses the P2P Device Address for communication between P2P Group devices, is that it may cause the receiver to be unable to perform a RARP query based on the P2P Device Address of the sender to obtain the corresponding IP address of the sender. This prevents inter-device communication based on Wi-Fi Direct, including the Miracast protocol, from establishing a connection properly. For the Miracast protocol, this results in stability issues such as screen mirroring connection failures between devices.

### SUMMARY

This application aims to solve at least one of the technical problems existing in the related art. To this end, embodiments of this application provide a communication connection establishment method, an apparatus, an electronic device, and a storage medium, which can prevent communication failures between devices and improve the stability of communication connections between devices.

In a first aspect, an embodiment of this application provides a communication connection establishment method, including:
in response to a networking request sent from a sender to a receiver, acquiring an interface address of the sender and an address resolution protocol table of the receiver, where the address resolution protocol table is a mapping table of the association between interface addresses and their corresponding Internet Protocol addresses;
based on the interface address and the address resolution protocol table, acquiring an Internet Protocol address of the sender; and
based on the Internet Protocol address, initiating a connection request to the sender, to enable the sender to establish a communication connection with the receiver based on the connection request.

In a second aspect, an embodiment of this application provides a communication connection establishment apparatus, including:
a first acquisition module, configured to, in response to a networking request sent from a sender to a receiver, acquire an interface address of the sender and an address resolution protocol table of the receiver, where the address resolution protocol table is a mapping table of the association between interface addresses and their corresponding Internet Protocol addresses;
a second acquisition module, configured to, based on the interface address and the address resolution protocol table, acquire an Internet Protocol address of the sender; and
a communication connection establishment module, configured to, based on the Internet Protocol address, initiate a connection request to the sender, to enable the sender to establish a communication connection with the receiver based on the connection request.

In a third aspect, an embodiment of this application also provides an electronic device, including a memory storing multiple computer programs, and a processor configured to load the computer programs from the memory to execute any of the communication connection establishment methods provided in the embodiments of this application.

In a fourth aspect, an embodiment of this application also provides a computer-readable storage medium, where the computer-readable storage medium stores multiple computer programs, and the computer programs are configured to, when loaded by a processor, execute any of the communication connection establishment methods provided in the embodiments of this application.

In a fifth aspect, an embodiment of this application also provides a computer program product, including a computer program, where the computer program, when executed by a processor, implements any of the communication connection establishment methods provided in the embodiments of this application.

### BENEFICIAL EFFECTS

Embodiments of this application directly acquire the Internet Protocol address using the interface address, thereby avoiding the problem where the Internet Protocol address cannot be obtained using the device address when the interface address and the device address are inconsistent. This prevents communication failures between devices and improves the stability of communication connections between devices.

### BRIEF DESCRIPTION OF THE DRAWINGS

To describe the technical solutions in the embodiments of this application more clearly, the accompanying drawings required for describing the embodiments are briefly introduced below. Apparently, the accompanying drawings in the following description are merely some embodiments of this application. A person of ordinary skill in the art can derive other drawings from these accompanying drawings without creative effort.
FIG. 1 is a schematic flowchart of a communication connection establishment method provided in an embodiment of this application;
FIG. 2 is a schematic sequence diagram of communication connection establishment provided in an embodiment of this application;
FIG. 3 is a schematic flowchart of an overall solution provided in an embodiment of this application;
FIG. 4 is a schematic structural diagram of a communication connection establishment apparatus provided in an embodiment of this application;
FIG. 5 is a schematic structural diagram of an electronic device provided in an embodiment of this application.

### DETAILED DESCRIPTION

The technical solutions in the embodiments of this application will be described clearly and completely below with reference to the accompanying drawings in the embodiments of this application. Apparently, the described embodiments are only a part of the embodiments of this application, rather than all of the embodiments. Based on the embodiments in this application, all other embodiments obtained by a person of ordinary skill in the art without creative effort fall within the protection scope of this application. In the description of the embodiments of this application, terms such as "first" and "second" are used for descriptive purposes only and are not to be construed as indicating or implying relative importance. Thus, a feature defined with "first" or "second" may explicitly or implicitly include one or more of that feature. In the description of the embodiments of this application, "multiple" means two or more, unless otherwise explicitly and specifically defined.

Embodiments of this application provide a communication connection establishment method, an apparatus, an electronic device, and a storage medium. Specifically, the embodiments of this application are described from the perspective of a communication connection establishment apparatus, which can be integrated into an electronic device. That is, the communication connection establishment method of the embodiments of this application can be executed by an electronic device. Optionally, the electronic device includes a terminal device. The terminal device may be a device such as a mobile phone, a tablet computer, a smart Bluetooth device, a notebook computer, a game console, or a Personal Computer (PC). Optionally, the electronic device includes a server. The server may be a standalone server, or a server network or server cluster, including but not limited to a computer, a network host, a single network server, a set of network servers, or a cloud server. A cloud server is composed of a large number of computers or network servers based on Cloud Computing.

It should be noted that the order of description of the following embodiments does not limit the preferred order of the embodiments. Although a logical order is shown in the flowcharts, in some cases, the operations shown or described may be executed in an order different from that shown.

Glossary:
Screen mirroring protocol: A protocol for transmitting content from one device to another for display over a network. Standard screen mirroring protocols in the multi-screen interaction field include DLNA, AirPlay, Miracast, etc.
Miracast: A screen mirroring protocol proposed by the Wi-Fi Alliance, also known as Wi-Fi Display (WFD). It is based on Wi-Fi Direct point-to-point connection and supports screen mirroring. It is currently widely used on devices running operating systems such as Android and Windows.
Wi-Fi Direct: Also known as Wi-Fi P2P, it allows devices to directly interconnect by forming a point-to-point ad-hoc network via WLAN without an intermediate access point.
P2P Group: A Peer-to-Peer (P2P) group. After two devices establish a Wi-Fi direct connection, a P2P group is formed, and Internet Protocol (IP) addresses are automatically assigned within the group via DHCP.
Group Owner (GO): After two devices establish a Wi-Fi direct connection and form a P2P group, the group owner assumes the GO role and acts as a DHCP server.
Group Client (GC): After two devices establish a Wi-Fi direct connection and form a P2P group, a group client assumes the GC role and acts as a DHCP client.
Dynamic Host Configuration Protocol (DHCP): A protocol used for centralized dynamic management and configuration of user IP addresses. DHCP networking adopts a client/server communication model, where the server controls a range of IP addresses. When a client logs into the server, it can automatically obtain an IP address and subnet mask allocated by the server.
Media Access Control (MAC) address: An address written into the hardware by the network device manufacturer during production, serving as a unique identifier for the device on a network. A MAC address is 48 bits (6 bytes) long and is usually represented as 12 hexadecimal digits, with a colon separating every two hexadecimal digits, such as 08:00:20: 0A:8C:6D. The first 3 bytes represent the Organizationally Unique Identifier (OUI), which is a code assigned by the IEEE registration authority to distinguish different manufacturers. The last 3 bytes, the extended identifier, are assigned by the manufacturer.
Reverse Address Resolution Protocol (RARP): A protocol that allows a device to obtain its IP address from the ARP table or cache of a gateway server based on its physical MAC address on a local area network.
Principle of Miracast protocol screen mirroring connection: In the Miracast protocol, there are generally two device roles: a sender and a receiver. The protocol implements device/service discovery (WFD Device/Service Discovery) capability by appending WFD Information Elements (IEs), which contain WFD device information, to Wi-Fi Beacon, Probe Request, and Probe Response frames. When the sender selects the receiver for a screen mirroring operation, the devices first complete ad-hoc network negotiation through Wi-Fi Direct and establish a P2P Group. Devices within this P2P Group are then assigned IP addresses for inter-device communication. After the P2P Group is successfully established, the sender needs to listen for RTSP (over TCP) connections and notify the receiver in the same P2P Group of the port information using the aforementioned WFD IE channel. The receiver needs to identify the sender by parsing information such as the P2P Group and obtain the sender's RTSP listening port and IP address. Then, the receiver actively initiates a connection to the sender. Finally, the devices complete subsequent protocol interactions through this RTSP connection to achieve screen mirroring.
Principle of Wi-Fi Direct ad-hoc network connection: After Wi-Fi Direct completes ad-hoc network negotiation, a P2P Group is established, and devices within this P2P Group are assigned IP addresses for inter-device communication. A P2P Group generally has two roles, GO (Group Owner) and GC (Group Client), which are decided during the ad-hoc networking phase when both parties exchange their respective Group Owner Intent attribute values. There is one and only one GO role in a P2P Group, while there may be multiple GC roles. During IP address allocation, the GO role acts as a local area network gateway. P2P devices in the P2P Group can generally obtain the IP address of the GO role relatively easily, while the IP address of a GC role generally needs to be obtained through a RARP query using the P2P device's MAC address. Regarding the MAC addresses of P2P devices in Wi-Fi Direct, two types are defined: P2P Device Address, which uniquely identifies a P2P device; and P2P Interface Address, which uniquely identifies a P2P device within a P2P Group. Although Wi-Fi Direct does not specify usage standards for these two types of MAC addresses, the P2P Device Address is generally used for Device Discovery before establishing or joining a P2P Group, while the P2P Interface Address is generally used for communication between P2P devices within a P2P Group. The P2P Interface Address is not necessarily consistent with the P2P Device Address, especially when the P2P device has the random MAC address feature enabled. However, the P2P Interface Address is generally generated from the P2P Device Address using a certain algorithm, which may vary among different Wi-Fi module manufacturers.
P2P device:
   For P2P devices with point-to-point direct connection capability: The P2P Interface Address information of the peer P2P device is provided, and the IP address of the peer P2P device is obtained via RARP.
   For P2P devices without point-to-point direct connection capability: A matching similarity algorithm is executed based on the OUI manufacturer information in the P2P Device Address of the peer P2P device. The ARP list of the local P2P device is traversed to find the most similar matching MAC address. This address is then marked as the P2P Interface Address of the peer P2P device, and the IP address of the peer P2P device is obtained via RARP.
Cloud side: Maintains and updates a list of similarity algorithms corresponding to Organizationally Unique Identifier (OUI) vendors, and distributes the list to Peer-to-Peer (P2P) devices.

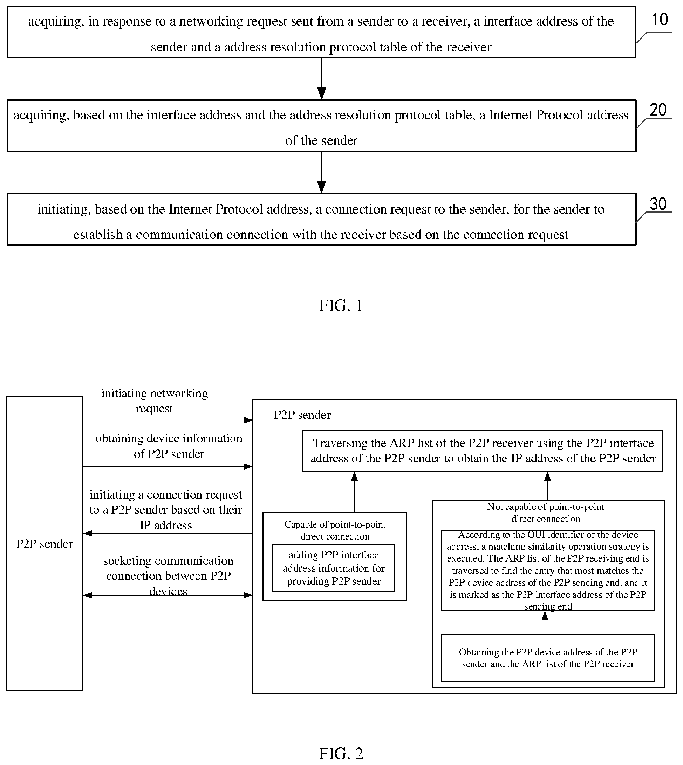

The following provides a detailed description with reference to the accompanying drawings. In embodiments of this application, a communication connection establishment apparatus is used as an example of an executing entity, and a P2P receiver is used as a specific example. Referring to FIG. 1, FIG. 1 is a schematic flowchart of a communication connection establishment method provided in an embodiment of this application. The specific process of the communication connection establishment method provided in this embodiment may include operations 10 to 30 as follows:
operation 10, quiring, in response to a networking request sent from a sender to a receiver, an interface address of the sender and an address resolution protocol table of the receiver.

Optionally, when a P2P sender needs to establish a Socket connection for communication with a P2P receiver, the P2P sender sends a networking request to the P2P receiver. At the same time, the P2P sender listens for subsequent Socket communication connection requests from the P2P receiver. Therefore, the P2P receiver responds to the networking request from the P2P sender and completes the negotiation and establishment of a P2P Group between the P2P sender and the P2P receiver. At this time, the P2P receiver needs to acquire the interface address of the P2P sender, the specific process of which is shown in operations 101 to 102. At the same time, the P2P receiver needs to acquire its local address resolution protocol table. The address resolution protocol table is an association mapping table between interface addresses and Internet Protocol addresses. In one embodiment, the address resolution protocol table is as shown in Table 1.

**Table 1 Address Resolution Protocol Table**

| IP Address (Internet Protocol address) | HW type | Flags | HW Address (device MAC address) | Mask | Device (local device network interface) |
|---|---|---|---|---|---|
| 192.168.0.118 | 0x1 | 0x2 | 9e: b2:77:94: 12: f2 | * | wlan0 |
| 192.168.49.104 | 0x1 | 0x2 | 72: f7:54:87:8f:42 | * | p2p-p2p0-3 |

operation 20, acquiring, based on the interface address and the address resolution protocol table, an Internet Protocol address of the sender.

Optionally, the P2P receiver performs a match in the address resolution protocol table according to the interface address to determine the Internet Protocol address corresponding to the interface address in the address resolution protocol table, and takes the Internet Protocol address as the Internet Protocol address of the P2P sender.

Specifically, the interface address of the P2P sender is used as an address key to traverse the address resolution protocol table to obtain the Internet Protocol address of the P2P sender. In one embodiment, the interface address of the P2P sender is used as a Media Access Control (MAC) address key to traverse and search the HW Address (device MAC address) column of the address resolution protocol table for an entry that matches the interface address of the P2P sender. The data in the "IP Address" column according to the row where the entry is located is identified as the Internet Protocol (IP) address of the P2P sender.

operation 30, initiating, based on the Internet Protocol address, a connection request to the sender, for the sender to establish a communication connection with the receiver based on the connection request.

Optionally, the P2P receiver initiates a Socket connection request to the P2P sender using the Internet Protocol address of the P2P sender. After receiving the Socket connection request sent by the P2P receiver, the P2P sender establishes a Socket communication connection with the P2P receiver according to the Socket connection request.

This embodiment directly acquires the Internet Protocol address via the interface address, which avoids the problem where the Internet Protocol address cannot be obtained by the device address when the interface address and the device address are inconsistent. This prevents communication failures between devices and improves the stability of inter-device communication connections.

In an optional embodiment, operations 101 to 102 are described as follows:
operation 101, in response to the networking request sent by the sender to the receiver, acquiring device information of the sender and a device connection mode of the receiver;
operation 102, based on the device connection mode and the device information, acquiring the interface address of the sender.

Optionally, in response to the networking request from the P2P sender, the P2P receiver acquires the device information of the P2P sender. The device information is used to acquire the interface address or device address of the P2P sender. Therefore, the device information includes a device address field and an interface address field. The device address of the P2P sender can be acquired based on the device address field, and the interface address of the P2P sender can be acquired based on the interface address field.

It should be noted that, for example, in a system on an Android platform device that follows the Android Open Source Project (AOSP) native specification, the Wi-Fi Direct framework, for devices that have completed P2P Group establishment, only supports acquiring partial information of the P2P sender, such as the P2P Device Address. However, the P2P Interface Address, which is generally used for inter-device connection communication within the P2P Group, cannot be directly obtained. Therefore, it is necessary to determine whether the P2P receiver has Wi-Fi Direct connection capability, that is, the P2P receiver needs to acquire its own device connection mode.

The device connection mode indicates whether the P2P receiver has a point-to-point direct connection capability. Therefore, the device connection mode can be that the P2P receiver has the point-to-point direct connection capability, or that the P2P receiver does not have the point-to-point direct connection capability.

Further, based on whether it has the point-to-point direct connection capability, the P2P receiver acquires the interface address of the P2P sender by combining the device connection mode and the device information of the P2P sender. The specific process is shown in operations 1021 to 1022.

This embodiment directly acquires the interface address of the sender, so as to directly acquire the Internet Protocol address via the interface address. This avoids the problem where the Internet Protocol address cannot be obtained using the device address when the interface address and the device address are inconsistent, prevents communication failures between devices, and improves the stability of inter-device communication connections.

Optionally, referring to FIG. 2, FIG. 2 is a schematic sequence diagram of communication connection establishment provided in an embodiment of this application. In an optional embodiment, operations 1021 to 1022 are described as follows:
operation 1021, if the device connection mode indicates that the point-to-point direct connection capability is available, acquiring the interface address field in the device information, and acquiring the interface address of the sender based on the interface address field;
operation 1022, if the device connection mode indicates that the point-to-point direct connection capability is not available, acquiring the device address field in the device information, and acquiring the interface address of the sender based on the device address field.

Optionally, if the device connection mode is that the P2P receiver has the point-to-point direct connection capability, information about the P2P Interface Address of the P2P sender can be provided on the P2P receiver. For example, in a system on an Android platform device that follows the AOSP native specification, for devices that have completed P2P Group establishment, the Wi-Fi Direct framework can add an Interface Address field in the WifiP2pDevice class corresponding to the P2P device information to correspond to the P2P Interface Address of that P2P device. The P2P Interface Address information of the P2P device can be acquired from the wpa_supplicant module at the Hardware Abstraction Layer (HAL) under the Wi-Fi Direct framework and passed up.

Therefore, if the device connection mode is that the P2P receiver has the point-to-point direct connection capability, the P2P receiver acquires the interface address field in the device information and parses the interface address field to obtain the interface address of the P2P sender.

In this embodiment, for a P2P receiver with Wi-Fi Direct connection capability, information about the P2P Interface Address of the P2P sender is provided to perform a Reverse Address Resolution Protocol (RARP) query to obtain the IP address of the P2P sender, ultimately achieving Socket connection communication between P2P devices within the P2P Group. This avoids the problem where the Internet Protocol address cannot be obtained using the device address when the interface address and the device address are inconsistent, prevents communication failures between devices, and improves the stability of inter-device communication connections.

Optionally, if the device connection mode is that the P2P receiver does not have the point-to-point direct connection capability, information about the P2P Device Address of the P2P sender can be provided on the P2P receiver. For example, in a system on an Android platform device that follows the AOSP native specification, for devices that have completed P2P Group establishment, the Wi-Fi Direct framework can obtain the P2P Device Address of the P2P device from the Device Address field in the WifiP2pDevice class corresponding to the P2P device information.

Therefore, if the device connection mode is that the P2P receiver does not have the point-to-point direct connection capability, the P2P receiver acquires the device address field in the device information and parses the device address field to obtain the device address. Further, the P2P receiver acquires the interface address of the P2P sender according to the device address. The specific process is shown in operations 10221 to 10224.

In this embodiment, for a P2P receiver without Wi-Fi Direct connection capability, if only the P2P Device Address information can be acquired, the interface address of the P2P sender is first acquired according to the device address, and then the Internet Protocol address is matched according to the interface address, instead of directly matching the Internet Protocol address according to the device address. This avoids the problem where the Internet Protocol address cannot be obtained using the device address when the interface address and the device address are inconsistent, prevents communication failures between devices, and improves the stability of inter-device communication connections.

In an optional embodiment, operations 10221 to 10224 are described as follows:
operation 10221, acquiring the device address of the sender based on the device address field, and acquiring a device vendor identifier based on the device address;
operation 10222, if a corresponding similarity calculation strategy is not found by traversing based on the device vendor identifier, performing fuzzy matching on the device address based on the address resolution protocol table of the receiver to obtain the interface address of the sender;
operation 10223, if a corresponding similarity calculation strategy is found by traversing based on the device vendor identifier, acquiring a target calculation strategy corresponding to the device vendor identifier;
operation 10224, based on the target calculation strategy, performing address calculation on the device address to obtain the interface address of the sender.

Optionally, the P2P receiver parses the device address field to obtain the device address of the P2P sender, and determines the first 3 bytes of the device address of the P2P sender as a device vendor's Organizationally Unique Identifier (OUI). In one embodiment, the device address of the P2P sender is 72: f7:54:87:0f:42, and the first 3 bytes of the device address are 72: f7:54. Therefore, the device vendor OUI is 72: f7:54.

Further, the P2P receiver acquires a similarity algorithm list from the cloud end and traverses the similarity algorithm list according to the device vendor OUI to determine whether a similarity calculation strategy corresponding to the device vendor OUI is found.

The similarity algorithm list is an association mapping table of device vendor OUIs and their corresponding similarity calculation strategies. The similarity algorithm list is stored in the cloud end, and its dynamic maintenance and updates can be more conveniently performed through cloud-based configuration and distribution. However, the similarity algorithm list can also be stored by means of local pre-configuration. The specific similarity calculation strategy for an OUI vendor can generally be obtained from the corresponding Wi-Fi module driver. In one embodiment, the similarity algorithm list is as shown in Table 2.

**Table 2 Similarity Algorithm List**

| OUI Identifier | Module Vendor | General Similarity Calculation Strategy | Specific Similarity Calculation Strategy |
|---|---|---|---|
| 72: f7:54 | rockchip | * | mac_addr [0] \|= 0x02; |
| | | | mac_addr [4] ^= 0x80; |
| * | * | Perform fuzzy matching based on the address resolution protocol table of the P2P receiver | * |

Further, if a corresponding similarity calculation strategy is not found by traversing the similarity algorithm list based on the device vendor OUI, the P2P receiver performs fuzzy matching on the device address based on its address resolution protocol table to obtain the interface address of the P2P sender. The specific process is shown in operations a to b. In one embodiment, the device vendor OUI is 68: f5:92. Traversing the similarity algorithm list based on this device vendor OUI does not find a corresponding similarity calculation strategy.

Further, if a corresponding similarity calculation strategy is found by traversing the similarity algorithm list based on the device vendor OUI, the P2P receiver acquires a target calculation strategy from the similarity algorithm list according to the device vendor OUI. In one embodiment, the device vendor OUI is 72: f7:54. The specific similarity calculation strategy acquired from the similarity algorithm list based on this device vendor OUI 72: f7:54 is determined as the target calculation strategy for this device vendor OUI.

Further, the P2P receiver performs an address calculation on the device address based on the target calculation strategy to obtain the interface address of the P2P sender. The specific process is shown in operations c to e.

In an embodiment of this application, for a P2P receiver that lacks WiFi Direct connection capability, if only the P2P Device Address information can be obtained, the similarity between the P2P Device Address and the P2P Interface Address is utilized. A matching similarity calculation strategy is executed based on the device manufacturer's Organizationally Unique Identifier (OUI). Then, an address calculation is performed based on the result of the similarity calculation strategy to obtain the interface address of the P2P sender. The Internet Protocol address is then matched based on the interface address, instead of directly matching the Internet Protocol address based on the device address. This avoids the problem of being unable to obtain the Internet Protocol address using the device address when the interface address and the device address are inconsistent, thereby preventing communication failures between devices and improving the stability of the communication connection between devices.

In an optional embodiment, the description of operation a to operation b is as follows:
operation a, the bytes in the device address are compared, sequentially by byte position, with the bytes of each interface address in the Address Resolution Protocol (ARP) table to obtain the byte difference number between the device address and each interface address in the ARP table;
operation b, the interface address of the sender is determined based on the byte difference number.

Optionally, the P2P receiver compares the bytes in the device address with the bytes of each interface address in the ARP table, sequentially by byte position, to obtain the byte difference number between the device address and each interface address in the ARP table.

In one embodiment, the ARP table is as shown in Table 1. Therefore, the interface addresses in the ARP table are the device MAC addresses 9e: b2:77:94:12: f2 and 72: f7:54:87:8f:42 in the HW Address column. The device address is 72: f5:54:83:8f:42. Therefore, by comparing the bytes sequentially by position, byte 72 is compared with byte 9e, byte f5 with byte b2, byte 54 with byte 77, byte 83 with byte 94, byte 8f with byte 12, and byte 42 with byte f2. The byte difference number between the device address 72: f5:54:83:8f:42 and the device MAC address 9e: b2:77:94:12: f2 is determined to be 6. By comparing the bytes sequentially by position, byte 72 is compared with byte 72, byte f5 with byte f7, byte 54 with byte 54, byte 83 with byte 87, byte 8f with byte 8f, and byte 42 with byte 42. The byte difference number between the device address 72: f5:54:83:8f:42 and the device MAC address 2: f7:54:87:8f:42 is determined to be 2.

Further, the P2P receiver determines the device MAC address in the ARP table that has a byte difference number with the device address less than or equal to a preset threshold to be the interface address of the P2P sender.

In one embodiment, the interface address of the P2P sender is determined according to the priority of the byte difference number, where a smaller byte difference number corresponds to a higher priority. For example, if the preset threshold is 2, the ARP table includes device MAC address 1 and device MAC address 2, the byte difference number between the device address and device MAC address 1 is 2, and the byte difference number between the device address and device MAC address 2 is 1. Therefore, the priority for a byte difference number of 1 is higher than the priority for a byte difference number of 2. Thus, device MAC address 2 in the ARP table is determined to be the interface address of the P2P sender.

In an embodiment of this application, for a P2P receiver that lacks WiFi Direct connection capability, fuzzy matching is performed on the device address based on the ARP table of the P2P receiver to obtain the interface address. The Internet Protocol address is then matched based on the interface address, instead of directly matching the Internet Protocol address based on the device address. This avoids the problem of being unable to obtain the Internet Protocol address using the device address when the interface address and the device address are inconsistent, thereby preventing communication failures between devices and improving the stability of the communication connection between devices.

In an optional embodiment, the description of operation c to operation e is as follows:
operation c, a calculation is performed on an original byte at a preset position in the device address based on the target calculation strategy to obtain a calculated byte for the preset position;
operation d, the original byte of the preset position in the device address is replaced with the calculated byte to obtain a calculated address of the sender;
operation e, the device address and the calculated address are verified based on the ARP table to obtain the interface address of the sender.

It should be noted that the target calculation strategy indicates the preset position in the device address that requires address calculation, and also indicates the method for the address calculation. Therefore, the P2P receiver determines the preset position in the device address that requires address calculation and the calculation method according to the target calculation strategy.

Further, the P2P receiver performs a calculation on the original byte of the preset position according to the calculation method to obtain the calculated byte for the preset position, and replaces the original byte of the preset position in the device address with the calculated byte to obtain the calculated address of the P2P sender.

Further, the P2P receiver performs address verification in the ARP table using the calculated address as a primary address and the device address as a secondary address, to determine whether a device MAC address identical to the calculated address or the device address exists in the ARP table.

Further, if it is determined that a device MAC address identical to the calculated address exists in the ARP table, the calculated address is determined to be the interface address of the P2P sender. If it is determined that a device MAC address identical to the calculated address does not exist in the ARP table, but a device MAC address identical to the device address does exist, the device address is determined to be the interface address of the P2P sender.

In one embodiment, the similarity algorithm list is as shown in Table 2, and the device address is 72: f7:54:87:0f:42. Therefore, the device manufacturer OUI is 72: f7:54. Thus, according to the similarity algorithm list, the target calculation strategy corresponding to the device manufacturer OUI is mac_addr [0] |= 0x02 and mac_addr [4] ^= 0x80. Here, mac_addr [0] |= 0x02 indicates that the position in the device address requiring address calculation is the 1st byte position, and the calculation method is an OR operation. mac_addr [4] ^= 0x80 indicates that the position in the device address requiring address calculation is the 5th byte position, and the calculation method is an XOR operation. Therefore, an OR operation is performed on the 1st byte of the device address 72: f7:54:87:0f:42 with 0x02, and simultaneously, an XOR operation is performed on the 5th byte with 0x80, to obtain the calculated address 72: f7:54:87:8f:42.

In an embodiment of this application, for a P2P receiver that lacks WiFi Direct connection capability, a calculation is performed on the device address based on the target calculation strategy to determine the interface address. The Internet Protocol address is then matched based on the interface address, instead of directly matching the Internet Protocol address based on the device address. This avoids the problem of being unable to obtain the Internet Protocol address using the device address when the interface address and the device address are inconsistent, thereby preventing communication failures between devices and improving the stability of the communication connection between devices.

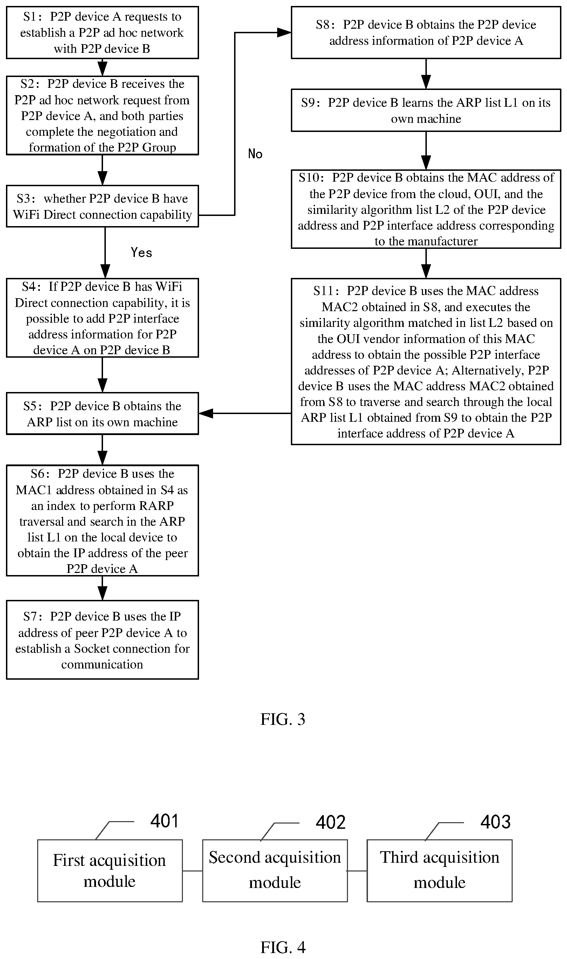

Optionally, the communication connection establishment method in an embodiment of this application is described using a screen casting scenario as an example. Referring to FIG. 3, FIG. 3 is a schematic flowchart of the overall solution provided in an embodiment of this application. Specifically:
S1: P2P device A (P2P sender) requests to establish a P2P ad-hoc network with P2P device B (P2P receiver) and listens for subsequent Socket communication connection requests from P2P device B. This corresponds to the P2P sender initiating a screen casting request to the P2P receiver in the Miracast protocol.
S2: P2P device B receives the P2P ad-hoc network request from P2P device A, and the two parties complete the negotiation and formation of a P2P Group. This corresponds to the P2P receiver receiving the screen casting request from the P2P sender in the Miracast protocol.
S3: It is determined whether P2P device B has WiFi Direct connection capability. For example, in a system on an Android platform device that follows the Android Open Source Project (AOSP) native specification, the WiFi Direct framework only supports obtaining partial information of the peer P2P device, such as the P2P Device Address, for devices that have completed P2P Group formation. However, the P2P Interface Address, which is generally used for inter-device connection communication within the P2P Group, cannot be directly obtained.
S4: If P2P device B has WiFi Direct connection capability, the P2P Interface Address information of P2P device A can be provided on P2P device B, denoted as MAC address MAC1. For example, in a system on an Android platform device that follows the AOSP native specification, for devices that have completed P2P Group formation, an Interface Address field corresponding to the P2P Interface Address of the P2P device can be added to the WifiP2pDevice class. The P2P Interface Address information of the P2P device can be obtained from the wpa_supplicant module in the Hardware Abstraction Layer (HAL) of the WiFi Direct framework and passed up.
S5: P2P device B obtains its local ARP list, which contains MAC information and IP addresses of the peer device. For example, the ARP address cache list L1 on Linux-like platform devices such as Android is generally the /proc/net/arp node, as shown in Table 1.
S6: P2P device B uses the MAC1 address obtained in S4 as an index to perform a Reverse Address Resolution Protocol (RARP) traversal search in its local ARP list L1 to obtain the IP address of the peer P2P device A. That is, it traverses the "HW address" column of the ARP list L1 to find an entry matching this MAC address, and takes the data in the "IP address" column of the corresponding row as the IP address of the peer P2P device A.
S7: P2P device B uses the IP address of the peer P2P device A to establish a Transmission Control Protocol (TCP)/User Datagram Protocol (UDP)-based Socket connection for communication. For example, in the Miracast protocol, after the receiver obtains the IP address and Real-Time Streaming Protocol (RTSP) connection listening port of the sender within the P2P Group, it actively initiates an RTSP connection request to the sender, thereby completing the screen casting connection process and entering the protocol service communication phase.

S1 to S7 are the specific operations of the technical solution when P2P device B has WiFi Direct connection capability.

The following operations are the specific operations of the technical solution when P2P device B does not have WiFi Direct connection capability, specifically including:
S8: P2P device B obtains the P2P Device Address information of P2P device A, denoted as MAC address MAC2. For example, in a system on an Android platform device that follows the AOSP native specification, for devices that have completed P2P Group formation, the P2P Device Address of the P2P device can be obtained from the device Address field in the WifiP2pDevice class.
S9: P2P device B obtains its local ARP list L1, which contains MAC information and IP addresses of the peer device, same as in S5.
S10: P2P device B acquires from the cloud end a similarity algorithm list L2, which contains algorithms for determining the similarity between a P2P Device Address and a P2P Interface Address corresponding to the OUI vendor of the P2P device's MAC address, as shown in Table 2. The dynamic maintenance and update of list L2 can be more conveniently performed through cloud-based configuration and delivery, but the similarity algorithm list L2 can also be stored by means of local pre-configuration. The vendor-specific similarity rule for an OUI can generally be obtained from the corresponding Wi-Fi module driver.
S11: P2P device B uses the MAC address MAC2 obtained in S8 and executes the matching similarity algorithm from list L2 based on the OUI vendor information of that MAC address to obtain a possible P2P Interface Address for P2P device A, denoted as MAC address MAC3. Using MAC address MAC3 as the primary address and MAC address MAC2 as the secondary address, a traversal search is performed for verification in the local ARP list L1 obtained from S9. The MAC address used by P2P device A for connection communication between devices in the P2P Group is finally obtained, denoted as MAC address MAC4.

For example, if the P2P Device Address of P2P device A is 72: f7:54:87:0f:42, the OUI is determined to be 72: f7:54. A traversal search is performed in the similarity algorithm list L2 configured in the cloud end based on the OUI. After matching, it is determined that the module vendor corresponding to this OUI is rockchip, and the vendor-specific similarity rule for this OUI is: perform an OR operation on the 1st byte of the MAC address with 0x02, and simultaneously, perform an XOR operation on the 5th byte with 0x80. After the P2P Device Address is calculated according to the similarity rule, the possible P2P Interface Address of P2P device A is obtained as 72: f7:54:87:8f:42. Using 72: f7:54:87:8f:42 as the primary address and 72: f7:54:87:0f:42 as the secondary address, a traversal search is performed for verification in the local ARP list L1 obtained from S9. It is finally confirmed that the MAC address used by P2P device A for connection communication between devices in the P2P Group is the P2P Interface Address 72: f7:54:87:8f:42 obtained through the similarity algorithm. To reduce the complexity of the traversal algorithm and improve search efficiency, when traversing and searching in the local ARP list L1 obtained from S9, the "P2P" keyword can be used to filter the "Device" column to prioritize searching in the matching rows.

When a corresponding vendor-specific similarity algorithm has not been configured for the Organizationally Unique Identifier (OUI) or a vendor-specific similarity rule is not in effect, a universal similarity rule may also be used for fuzzy matching. Specifically, P2P device B uses the MAC address MAC2 obtained in S8. When traversing and searching in the local ARP list L1 obtained in S9, a binary bitwise XOR operation is performed between the MAC address MAC2 and the data in the "HW address" column, and the number of differing bits in each row is counted. A best match is identified as similar if the number of differing bits is within a certain range (e.g., when the number of differing bits is only 2). In this way, the MAC address used by P2P device A for connection communication between devices in the P2P Group is obtained, and consequently, the P2P interface address of P2P device A is obtained.

Further, by repeating S5 to S7, Socket connection communication between P2P device B and the peer P2P device A can be established.

The communication connection establishment apparatus provided in embodiments of this application is described below. The communication connection establishment apparatus described below and the communication connection establishment method described above may be referenced with respect to each other.

Referring to FIG. 4, FIG. 4 is a schematic structural diagram of a communication connection establishment apparatus provided in an embodiment of this application. The communication connection establishment apparatus may include:
a first acquisition module 401, configured to, in response to a networking request sent from a sender to a receiver, acquire an interface address of the sender and an address protocol resolution table of the receiver, where the address protocol resolution table is a mapping table between interface addresses and their corresponding Internet Protocol addresses;
a second acquisition module 402, configured to acquire an Internet Protocol address of the sender based on the interface address and the address protocol resolution table; and
a communication connection establishment module 403, configured to initiate a connection request to the sender based on the Internet Protocol address, so that the sender establishes a communication connection with the receiver based on the connection request.

In an optional embodiment, the first acquisition module 401 is further configured to:
in response to a networking request sent from a sender to a receiver, acquire device information of the sender and a device connection mode of the receiver, where the device connection mode indicates whether a point-to-point direct connection capability is available; and
acquire the interface address of the sender based on the device connection mode and the device information.

In an optional embodiment, the first acquisition module 401 is further configured to:
if the device connection mode indicates that the point-to-point direct connection capability is available, acquire an interface address field in the device information, and acquire the interface address of the sender based on the interface address field; or
if the device connection mode indicates that the point-to-point direct connection capability is not available, acquire a device address field in the device information, and acquire the interface address of the sender based on the device address field.

In an optional embodiment, the first acquisition module 401 is further configured to:
acquire a device address of the sender based on the device address field, and acquire a device manufacturer identifier based on the device address;
if a corresponding similarity calculation strategy is not found for the given device manufacturer identifier, perform fuzzy matching on the device address based on the address protocol resolution table of the receiver to obtain the interface address of the sender; or
if a corresponding similarity calculation strategy is found for the given device manufacturer identifier, acquire a target calculation strategy corresponding to the device manufacturer identifier; and
perform an address calculation on the device address based on the target calculation strategy to obtain the interface address of the sender.

In an optional embodiment, the first acquisition module 401 is further configured to:
compare bytes in the device address with bytes of each interface address in the address protocol resolution table for differences in order of byte position from front to back, to obtain a byte difference number between the device address and each interface address in the address protocol resolution table; and
determine the interface address of the sender based on the byte difference number.

In an optional embodiment, the first acquisition module 401 is further configured to:
perform a calculation on an original byte at a preset position in the device address based on the target calculation strategy to obtain a calculated byte of the preset position;
replace the original byte of the preset position in the device address with the calculated byte to obtain a calculated address of the sender; and
verify the device address and the calculated address based on the address protocol resolution table to obtain the interface address of the sender, where the interface address of the sender is the device address or the calculated address.

In an optional embodiment, the second acquisition module 402 is further configured to:
use the interface address of the sender as an address key to traverse the address protocol resolution table to obtain the Internet Protocol address of the sender.

Embodiments of this application directly acquire the Internet Protocol address via the interface address. This avoids the problem of being unable to acquire the Internet Protocol address from the device address when the interface address and the device address are inconsistent. Consequently, communication failures between devices are prevented, and the stability of the communication connection between devices is improved.

The specific embodiments of the communication connection establishment apparatus provided in this application are substantially the same as the embodiments of the communication connection establishment method, and details thereof are not described herein again.

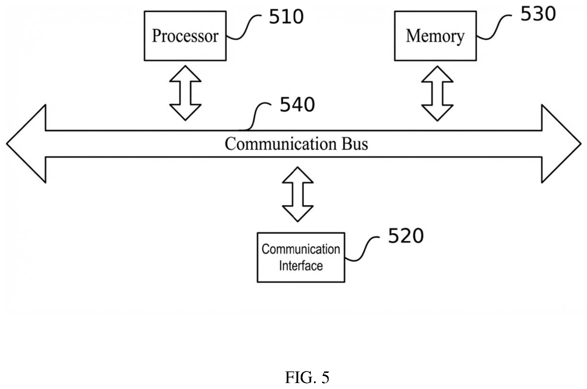

Optionally, as shown in FIG. 5, FIG. 5 is a schematic structural diagram of an electronic device provided in an embodiment of this application. The electronic device may include: a processor 510, a communication interface 520, a memory 530, and a communication bus 540. The processor 510, the communication interface 520, and the memory 530 communicate with each other through the communication bus 540. The processor 510 can invoke a computer program in the memory 530 to execute the operations of the communication connection establishment method, for example, including:
in response to a networking request sent from a sender to a receiver, acquiring an interface address of the sender and an address protocol resolution table of the receiver, where the address protocol resolution table is a mapping table between interface addresses and their corresponding Internet Protocol addresses;
acquiring an Internet Protocol address of the sender based on the interface address and the address protocol resolution table; and
initiating a connection request to the sender based on the Internet Protocol address, for the sender to establish a communication connection with the receiver based on the connection request.

In another aspect, an embodiment of this application also provides a non-transitory computer-readable storage medium. The non-transitory computer-readable storage medium includes a computer program. The computer program can be stored on the non-transitory computer-readable storage medium. When the computer program is executed by a processor, it causes a computer to perform the operations of the communication connection establishment method provided in the foregoing embodiments, for example, including:
in response to a networking request sent from a sender to a receiver, acquiring an interface address of the sender and an address protocol resolution table of the receiver, where the address protocol resolution table is a mapping table between interface addresses and their corresponding Internet Protocol addresses;
acquiring an Internet Protocol address of the sender based on the interface address and the address protocol resolution table; and
initiating a connection request to the sender based on the Internet Protocol address, for the sender to establish a communication connection with the receiver based on the connection request.

In yet another aspect, an embodiment of this application also provides a computer product. The computer product includes a computer program. The computer program can be stored on the computer product. When the computer program is executed by a processor, it causes a computer to perform the operations of the communication connection establishment method provided in the foregoing embodiments, for example, including:
in response to a networking request sent from a sender to a receiver, acquiring an interface address of the sender and an address protocol resolution table of the receiver, where the address protocol resolution table is a mapping table between interface addresses and their corresponding Internet Protocol addresses;
acquiring an Internet Protocol address of the sender based on the interface address and the address protocol resolution table; and
initiating a connection request to the sender based on the Internet Protocol address, for the sender to establish a communication connection with the receiver based on the connection request.

The apparatus embodiments described above are merely illustrative. The units described as separate components may or may not be physically separate. The components displayed as units may or may not be physical units; that is, they may be located in one place or may be distributed across multiple network units. Some or all of the modules may be selected according to actual needs to achieve the objectives of the solutions of the embodiments. A person of ordinary skill in the art can understand and implement the present application without creative effort.

From the description of the foregoing embodiments, a person skilled in the art can clearly understand that the embodiments may be implemented by means of software in combination with a necessary general-purpose hardware platform, or certainly by hardware. Based on this understanding, the technical solutions in essence, or the part thereof that contributes to the prior art, may be embodied in the form of a software product. The computer software product may be stored in a computer-readable storage medium, such as a ROM/RAM, a magnetic disk, or an optical disc, and includes several instructions for causing a computer device (which may be a personal computer, a server, or a network device, etc.) to perform the methods described in the various embodiments or certain parts of the embodiments.

Finally, it should be noted that the foregoing embodiments are merely for illustrating the technical solutions of this application, and not for limiting them. Although this application has been described in detail with reference to the foregoing embodiments, a person of ordinary skill in the art should understand that they can still modify the technical solutions described in the foregoing embodiments or make equivalent replacements to some of the technical features therein. Such modifications or replacements do not cause the essence of the corresponding technical solutions to depart from the spirit and scope of the technical solutions of the embodiments of this application.

## Claims

1. A communication connection establishment method, comprising:
acquiring, in response to a networking request sent from a sender to a receiver, an interface address of the sender and an address resolution protocol table of the receiver, wherein the address resolution protocol table is a mapping table between interface addresses and corresponding Internet Protocol addresses;
acquiring, based on the interface address and the address resolution protocol table, an Internet Protocol address of the sender; and
initiating, based on the Internet Protocol address, a connection request to the sender, for the sender to establish a communication connection with the receiver based on the connection request.

2. The communication connection establishment method according to claim 1, wherein the acquiring the interface address of the sender in response to the networking request sent from the sender to the receiver comprises:
acquiring, in response to the networking request sent by the sender to the receiver, a device information of the sender and a device connection mode of the receiver, wherein the device connection mode indicates whether the receiver has a point-to-point direct connection capability; and
acquiring, based on the device connection mode and the device information, the interface address of the sender.

3. The communication connection establishment method according to claim 2, wherein the acquiring the interface address of the sender based on the device connection mode and the device information comprises:
when the device connection mode indicates the receiver has the point-to-point direct connection capability, acquiring an interface address field in the device information, and acquiring the interface address of the sender based on the interface address field; or
when the device connection mode indicates the receiver doesn't have the point-to-point direct connection capability, acquiring a device address field in the device information, and acquiring the interface address of the sender based on the device address field.

4. The communication connection establishment method according to claim 3, wherein the acquiring the interface address of the sender based on the interface address field comprises:
parsing the interface address field to obtain the interface address of the sender.

5. The communication connection establishment method according to claim 3, wherein the acquiring the interface address of the sender based on the device address field comprises:
parsing the device address field to obtain a device address; and
acquiring, according to the device address, the interface address of the sender.

6. The communication connection establishment method according to claim 3, wherein the acquiring the interface address of the sender based on the device address field comprises:
acquiring the device address of the sender based on the device address field, and acquiring a device manufacturer identifier based on the device address;
when a corresponding similarity calculation strategy is not found for the acquired device manufacturer identifier, performing fuzzy matching on the device address based on the address resolution protocol table of the receiver to obtain the interface address of the sender; or,
when the corresponding similarity calculation strategy is found for the acquired device manufacturer identifier, acquiring a target calculation strategy corresponding to the device manufacturer identifier; and
performing, based on the target calculation strategy, address calculation on the device address to obtain the interface address of the sender.

7. The communication connection establishment method according to claim 6, wherein the acquiring the device manufacturer identifier based on the device address comprises:
taking first 3 bytes in the device address of the sender as a device manufacturer Organizationally Unique Identifier, OUI.

8. The communication connection establishment method according to claim 7, wherein after the acquiring the device manufacturer identifier based on the device address, the method further comprises:
acquiring a similarity algorithm list from a cloud end; and
traversing in the similarity algorithm list according to the device manufacturer OUI to determine whether a corresponding similarity calculation strategy exists.

9. The communication connection establishment method according to claim 8, wherein the similarity algorithm list is a mapping table of device manufacturer OUIs and similarity calculation strategies; and
the similarity algorithm list is stored in the cloud end, or stored by means of local pre-configuration.

10. The communication connection establishment method according to claim 6, wherein the performing the fuzzy matching on the device address based on the address resolution protocol table of the receiver to obtain the interface address of the sender comprises:
comparing, according to an order of byte positions from front to back, bytes in the device address with bytes of each interface address in the address resolution protocol table for differences, to obtain a byte difference number between the device address and each interface address in the address resolution protocol table; and
determining the interface address of the sender based on the byte difference number.

11. The communication connection establishment method according to claim 10, wherein the determining the interface address of the sender based on the byte difference number comprises:
setting the device MAC address as the interface address of the sender when the byte difference number of the device MAC addresses is smaller than or equal to a preset threshold.

12. The communication connection establishment method according to claim 10, wherein the determining the interface address of the sender based on the byte difference number comprises:
determining the interface address of the sender according to a priority of the byte difference number.

13. The communication connection establishment method according to claim 6, wherein the performing the address calculation on the device address based on the target calculation strategy to obtain the interface address of the sender, comprises:
performing, based on the target calculation strategy, a calculation on an original byte of a preset position in the device address to obtain a calculated byte of the preset position;
replacing the original byte of the preset position in the device address with the calculated byte to obtain a calculated address of the sender; and
verifying, based on the address resolution protocol table, the device address and the calculated address to obtain the interface address of the sender, wherein the interface address of the sender is the device address or the calculated address.

14. The communication connection establishment method according to claim 13, wherein before the performing the calculation on the original byte of the preset position in the device address based on the target calculation strategy to obtain the calculated byte of the preset position, the method further comprises:
determining, according to the target calculation strategy, the preset position in the device address that requires the address calculation and a calculation manner of the address calculation.

15. The communication connection establishment method according to claim 13, wherein the verifying the device address and the calculated address based on the address resolution protocol table to obtain the interface address of the sender comprises:
using the calculated address as a priority address and the device address as an auxiliary address, and performing address verification in the address resolution protocol table to obtain the interface address of the sender.

16. The communication connection establishment method according to claim 15, wherein the using the calculated address as a priority address and the device address as an auxiliary address, and performing address verification in the address resolution protocol table to obtain the interface address of the sender comprises:
determining whether a device MAC address identical to the calculated address or the device address exists in the address resolution protocol table;
when a device MAC address identical to the calculated address exists in the address resolution protocol table, taking the calculated address as the interface address of the sender; and
when a device MAC address identical to the calculated address does not exist in the address resolution protocol table, but a device MAC address identical to the device address exists in the address resolution protocol table, taking the device address as the interface address of the sender.

17. The communication connection establishment method according to claim 1, wherein the acquiring the Internet Protocol address of the sender based on the interface address and the address resolution protocol table comprises:
traversing, according to the interface address of the sender, the address resolution protocol table to obtain the Internet Protocol address of the sender.

18. The communication connection establishment method according to claim 12, wherein the traversing the address resolution protocol table according to the interface address of the sender to obtain the Internet Protocol address of the sender comprises:
traversing and searching, according to the interface address of the sender, in a device MAC address column of the address resolution protocol table for an entry matching with the interface address of the sender; and
taking Internet Protocol address column data corresponding to a row where the entry is located as the Internet Protocol address of the sender.

19. An electronic device, comprising a processor and a memory, wherein the memory stores a plurality of computer programs, and the processor is configured to load the computer programs from the memory to execute the communication connection establishment method according to any one of claims 1 to 18.

20. A computer-readable storage medium, wherein the computer-readable storage medium stores a plurality of computer programs, and the computer programs are adapted to be loaded by a processor to execute the communication connection establishment method according to any one of claims 1 to 18.
